# EUROPÄISCHE PATENTSCHRIFT

(11) **EP 1 153 858 B1**
(45) Veröffentlichungstag und Bekanntmachung des Hinweises auf die Patenterteilung: **20.04.2005**
(21) Anmeldenummer: 01110291.0
(22) Anmeldetag: 26.04.2001
(51) Int. Cl.: B65G 47/14

(54) **Sortiereinrichtung**
Sorting device
Dispositif de tri

(30) Priorität: 12.05.2000 US 570858
(43) Veröffentlichungstag der Anmeldung: 14.11.2001
(73) Patentinhaber: DEERE & COMPANY, Moline, Illinois 61265-8098 (US)
(72) Erfinder: Schmitz, Joseph Paul, Waterloo, IA 50703 (US)
(74) Vertreter: Magin, Ludwig Bernhard

(56) Entgegenhaltungen:
- FR-A- 1 059 137
- US-A- 2 635 261
- US-A- 3 791 537
- US-A- 4 434 885

## Beschreibung

Die Erfindung betrifft eine Sortiereinrichtung für längliche Teile, welche vorzugsweise einen Schaft und einen Kopf aufweisen, mit einer gekippten, drehend antreibbaren Scheibe, wenigstens einem Aufnahmemittel zur Aufnahme von Teilen aus einem Behälter, das an der Scheibe drehbar angebracht ist, wenigstens ein Paar von Armen aufweist, die auf der Oberfläche der Scheibe vorgesehen sind und sich nach außen erstrecken, und mit einem Gewichtselement derart zusammenwirkt, daß eine vorgegebene Ausrichtung des Aufnahmemittels auch dann aufrechterhalten wird, wenn die Scheibe rotiert, und einer Transfereinrichtung zur Entgegennahme von Teilen von dem Aufnahmemittel, wobei die Transfereinrichtung an die Scheibe angrenzend angeordnet ist.

Bekannte Sortiermaschinen bzw. -einrichtungen entnehmen Teile von einem Haufen und ordnen sie zur weiteren Verwendung in einer Reihe an. Für längliche Teile mit Kopf und Schaft, wie beispielsweise Motorventile oder Schrauben, sind beispielsweise Trennförderer von Spectrum Automation Company, und Stufenförder von Köberlein bekannt. Nach dem Aufnehmen bzw. Trennen der Teile müssen diese zur weiteren Verwendung und/oder Bearbeitung ausgerichtet bzw. gedreht werden. Üblicherweise wird dies dadurch erzielt, daß die Teile in einem V-förmigen Kanal angeordnet und geschüttelt werden, bis sie in eine zum Transfer durch einen Förderer geeignete Ausrichtung fallen. Teile, die nicht korrekt ausgerichtet sind, fallen auf den ursprünglichen Haufen zur späteren Aufnahme zurück. Derzeit werden Teile wie Motorventile durch Vibrationsrüttler bzw. Vibrationsseparatoren getrennt. Die Verwendung von Vibrationsseparatoren erhöht die Instandhaltungskosten und auch die Einrichtungskosten, da geringfügige Teileänderungen eine Neueinstellung des Vibrationsseparators erfordern. Zusätzlich müssen viele Teile, die nicht automatisch zurück in die Sortiereinrichtung fallen, manuell aufgesammelt und zurückgeführt werden.

Die US-A-2,998,119 zeigt eine Sortiereinrichtung für Zinken. Diese Sortiereinrichtung weist einen geneigten, drehenden Schüttgutbehälter mit einer flachen Bodenscheibe auf, die von einer Schürze umgeben ist und an der Zapfen vorgesehen sind. Die Zapfen greifen an den Zinken an und nehmen diese von dem Schüttgutbehälter auf. Eine einzelne Schiene bzw. ein Transferelement nimmt die Zinken von den Zapfen ab, um sie an eine andere Stelle weiter zu transportieren.

Die US-A-3,791,537 zeigt eine Sortiereinrichtung für tassenförmige Gegenstände, mit einer rotierenden Scheibe, welche die Gegenstände aus einem Sammelbehälter aufnimmt, ausrichtet und vertikal geordnet aufstapelt.

Das der Erfindung zugrunde liegende Problem wird darin gesehen, daß eine solche Sortiereinrichtung nicht in der Lage ist, längliche Teile, welche einen Kopf und eine Schaft aufweisen, wie beispielsweise Schrauben oder Motorventile, aufzunehmen und zu sortieren.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Sortiereinrichtung zur Verfügung gestellt, die längliche Teile, welche vorzugsweise einen Kopf und einen Schaft aufweisen, beispielsweise Motorventile, aufzunehmen und auszurichten. Eine solche Sortiereinrichtung weist ein geneigtes, drehbares Rad bzw. eine Scheibe auf, welche an einen Schüttgutbehälter bzw. allgemein an einen Teile enthaltenden Behälter angrenzend angeordnet ist. Die Scheibe wird beispielsweise durch einen Motor angetrieben, wobei ein Getriebe bzw. eine Geschwindigkeitsreduziereinrichtung vorgesehen sein kann. Es ist aber auch denkbar, daß die Scheibe manuell, beispielsweise mittels einer Kurbel etc., in Rotation versetzt wird. An der Scheibe ist wenigstens ein Aufnahmemittel zur Aufnahme von Teilen aus dem Behälter vorgesehen. Mit dem Aufnahmemittel wirkt ein Gewichtselement derart zusammen, daß das Aufnahmemittel und somit auch die durch das Aufnahmemittel aufgenommenen Teile durch die Wirkung der Schwerkraft zumindest im wesentlichen in einer vorgegebenen Ausrichtung gehalten werden, sowohl wenn die Scheibe still steht, als auch wenn sie rotiert. Das Gewichtselement kann hierzu direkt an dem Aufnahmemittel angebracht bzw. mit diesem verbunden sein oder beispielsweise an einer Lagerwelle etc. des Aufnahmemittels vorgesehen bzw. angebracht werden. Weist das Aufnahmemittel wenigstens ein Paar von Armen auf, so bilden diese eine zumindest im wesentlichen V-förmige Struktur, welche dazu geeignet ist, Teile aufzunehmen. Die Arme sind derart beabstandet, daß an der Spitze der V-förmigen Struktur ein Spalt entsteht, so daß längliche Teile bzw. deren Schäfte in diesen Spalt eintreten bzw. hindurchtreten und das Teil durch eine Verbreiterung bzw. einen Kopfteil in der V-förmigen Struktur gehalten wird.

Ein drehbares Anbringen des Aufnahmemittels durch die Scheibe kann in einfacher Weise dadurch erfolgen, daß die Scheibe eine Aussparung aufweist, welche vorzugsweise aufgrund der einfachen Herstellbarkeit in der Art einer Bohrung ausgeführt ist, durch welche das Aufnahmemittel zumindest bereichsweise hindurchgesteckt und mittels üblicher Mittel, wie beispielsweise eines Steckbolzens, Sprengrings oder einer Mutter gesichert wird. Es kann auch ein Lagerring vorgesehen sein, dessen Durchmesser den Durchmesser der Welle übersteigt. Weist das Aufnahmemittel eine zumindest im wesentlichen zylindrische Welle auf, bzw. ist es mit einer solchen verbunden, so begünstigt dies eine drehbare Lagerung in der Aussparung und darüber hinaus eine einfache Herstellbarkeit.

Die Arme können aus einem Vollmaterial herausgearbeitet oder an der Welle vorgesehen bzw. angebracht sein, wobei dies beispielsweise durch ein Verschweißen etc. erfolgen kann.

Eine Aufnahme der Teile durch die Aufnahmemittel wird begünstigt, wenn die Scheibe bzw. die Aufnahmemittel möglichst dicht an dem die Teile enthaltenden Behälter vorbeigeführt wird/werden. Vorzugsweise werden die Aufnahmemittel durch den Behälter hindurchgeführt. Dies kann beispielsweise dadurch realisiert werden, daß die Aufnahmemittel bzw. ihre Arme durch Schlitze in einer Wandung insbesondere einer Bodenwand des Behälters hindurchgeführt werden. Um einem Verklemmen des Aufnahmemittels bzw. der Arme gegenüber der Bodenwand bzw. gegenüber den Schlitzen entgegenzuwirken, ist es vorteilhaft, wenn die Bodenwand eine Aussparung aufweist, die durch eine verschieblich mit der Bodenwand verbundene Platte abgedeckt wird, wobei der Schlitz bzw. die Schlitze in der Platte vorgesehen sind.

Vorzugsweise ist die Platte in Richtung einer zentralen Stellung federbelastet. Dies ermöglicht eine im wesentlichen gleichbleibende Ausrichtung der Platte sowie ein Ausweichen derselben, sobald eine Kraft beispielsweise durch das Aufnahmemittel bzw. einen oder mehrere Arme aufgebracht wird.

Es ist denkbar, den Behälter in seinem an die Scheibe angrenzenden Bereich geschlossen auszubilden. Vorzugsweise ist er aber zumindest bereichsweise geöffnet ausgeführt, da dies ein direkteres Herantreten der Teile an die Scheibe und somit eine bessere Aufnahme durch die Aufnahmemittel begünstigt.

Um eine Mehrzahl von Teilen gleichzeitig aufnehmen und damit sortieren bzw. ausrichten zu können, können auf der Scheibe mehrere Aufnahmemittel vorgesehen sein. In einfacher Weise können diese Aufnahmemittel auf der Oberfläche der Scheibe wenigstens eine Reihe bilden, welche sich von einem äußeren Punkt zu einem inneren Punkt auf der Scheibe erstreckt.

Schließt die Reihe mit einer radialen Linie, die sich durch den Scheibenmittelpunkt erstreckt, einen Winkel ein, so kann eine Art Schöpfeffekt erzielt werden, da das äußere Aufnahmemittel einem weiter innen angeordneten Aufnahmemittel nicht in dem Maße voreilt, wie es dies bei einer rein radialen Anordnung tun würde.

Um die Übernahme der Teile durch die Transfereinrichtung zu vereinfachen, kann diese wenigstens ein Schienenpaar aufweisen. Der Schaft der Teile kann zwischen die Schienen eintreten und der Kopfteil bzw. der verbreiterte Bereich der Teile kann auf den Schienen aufliegen. Das Schienenpaar kann beispielsweise in der Art geneigt ausgeführt sein, daß die Teile bedingt durch ihr Gewicht nach unten gleiten und auf diese Weise transportiert werden, ohne daß ein Antrieb vorgesehen werden muß. Es ist aber auch denkbar, daß die Transfereinrichtung antreibbare Transfermittel umfaßt. Sind auf der Scheibe mehrere Aufnahmemittel vorgesehen, die nicht hintereinander, sondern in irgendeiner Form nebeneinander angeordnet sind, so ist es vorteilhaft mehrere Schienenpaare vorzusehen.

In der Zeichnung ist ein nachfolgend näher beschriebenes Ausführungsbeispiel der Erfindung dargestellt. Es zeigt:
- Fig. 1: eine Vorderansicht einer Sortiereinrichtung,
- Fig. 2: eine Seitenansicht der Sortiereinrichtung aus Fig. 1,
- Fig. 3: eine Schnittdarstellung entlang der Linie 3-3 aus Fig. 1,
- Fig. 4: eine Schnittdarstellung entlang der Linie 4-4 aus Fig. 3,
- Fig. 5: eine Schnittdarstellung entlang der Linie 5-5 aus Fig. 4,
- Fig. 6: eine Schnittdarstellung entlang der Linie 6-6 aus Fig. 1,
- Fig. 7: eine Ansicht in Richtung der Pfeile 7-7 aus Fig. 6,
- Fig. 8: eine Schnittdarstellung entlang der Linie 8-8 aus Fig. 7 und
- Fig. 9: eine vergrößerte Darstellung eines Bereichs aus Fig. 2.

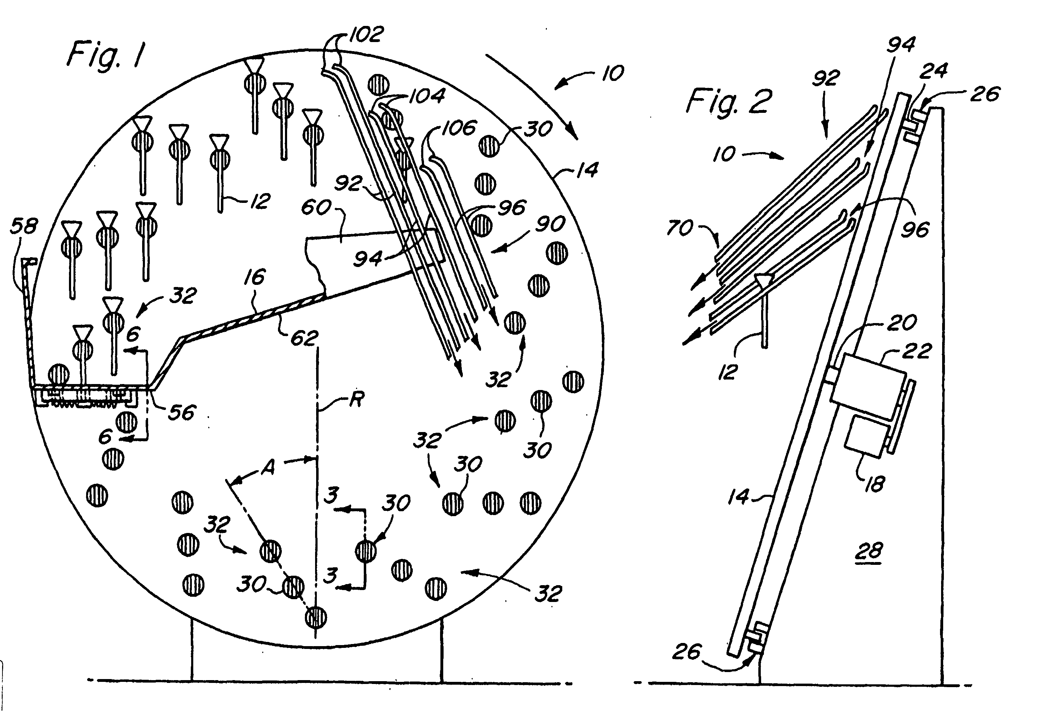

Es wird zuerst auf die Figuren 1 und 2 bezug genommen, die eine Sortier- und Ausrichteinrichtung, die im folgenden nur als Sortiereinrichtung 10 bezeichnet wird, zur Aufnahme von Teilen, wie beispielsweise von Motorventilen bzw. Ventilen 12, aus einer Menge von Ventilen, zum Ausrichten oder Wenden/Drehen der Ventile 12 und zum Verbringen der Ventile 12 an eine andere Stelle zeigt. Die Sortiereinrichtung 10 weist ein gekipptes Rad bzw. eine Scheibe 14 auf, welche drehbar angrenzend an einen Schüttgutbehälter bzw. einen Behälter 16 angebracht ist. Die Scheibe 14 wird durch einen Motor 18 in Rotation versetzt, welcher mit einer zentralen Welle 20 der Scheibe 14 über eine Geschwindigkeitsreduziereinrichtung 22 verbunden ist. Eine zylindrische, ringförmige Felge 24 erstreckt sich axial von der Motorseite der Scheibe 14 weg. Die Felge wird von Leiteinrichtungen 26 aufgenommen, welche an einer Basis 28 vorgesehen sind. Bei dem Motor 18 kann es sich um einen Elektromotor, einen Hydromotor oder etwas entsprechendes handeln.

Eine Mehrzahl von Haken bzw. Aufnahmemitteln 30 ist drehbar an der Scheibe 14, vorzugsweise in einer Mehrzahl von Reihen 32, welche auf der Oberfläche der Scheibe 14 voneinander beabstandet vorgesehen sind, angebracht. Vorzugsweise erstreckt sich jede Reihe 32, wie dies am besten aus Fig. 1 ersehen werden kann, von einem äußeren Punkt in der Nähe einer äußeren Kante der Scheibe 14 zu einem inneren Punkt, der von dem äußeren Punkt radial innenliegend angeordnet ist, und jede Reihe 32 bildet eine Reihenlinie, welche mit Bezug auf eine radiale Linie R, die sich von dem äußeren Punkt zu einem Mittelpunkt der Scheibe 14 erstreckt, einen Winkel A bildet.

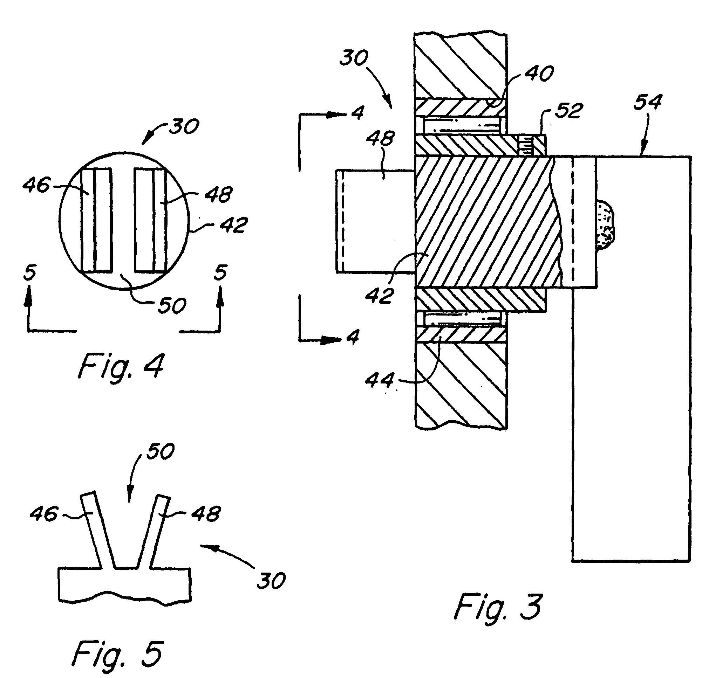

Wie es am besten aus den Figuren 3, 4 und 5 ersehen werden kann, wird jedes Aufnahmemittel 30 durch eine entsprechende Bohrung bzw. Aussparung 40, welche sich axial durch die Scheibe 14 erstreckt, aufgenommen. Jedes Aufnahmemittel 30 weist eine zylindrische Welle 42 auf, welche durch ein Lager 44 aufgenommen wird, welches in der Aussparung 40 angebracht ist. Jedes Aufnahmemittel 30 weist auch ein Paar von Armen 46, 48 auf, welche sich von der Welle 42 weg erstrecken und eine im wesentlichen V-förmige Struktur mit einem Spalt 50 dazwischen bilden, wie es am besten in Fig. 5 gesehen werden kann. Ein zylindrischer Lagerring 52 (wie er von den meisten Lagerherstellern gewerblich erhältlich ist) ist an dem Endbereich der Welle 42, der den Armen 46, 48 gegenüberliegt, angebracht. Der Lagerring 52 weist einen äußeren Durchmesser auf, welcher größer ist als der Durchmesser der Welle 42. Das obere Ende einer Gewichtsstange bzw. eines Gewichtselements 54 ist an dem Endbereich der Welle 42 beispielsweise durch ein Verschweißen angebracht. Da das Lager 44 es dem Aufnahmemittel 30 erlaubt, mit Bezug auf die Scheibe 14 frei zu rotieren, neigt das Gewicht des Gewichtselements 54 dazu, zu bewirken, daß das Gewichtselement 54 vertikal von seinem oberen Endbereich nach unten hängt, wenn sich die Scheibe 14 dreht. Dies trägt dazu bei, das Aufnahmemittel 30 derart ausgerichtet zu halten, daß sich der Spalt 50 im wesentlichen vertikal erstreckt, so daß die Ventile 12, die durch die Aufnahmemittel 30 gehalten werden, ebenfalls in einer im wesentlichen vertikalen Ausrichtung, wie es in den Fig. 1 und 4 gesehen werden kann, herunterhängen.

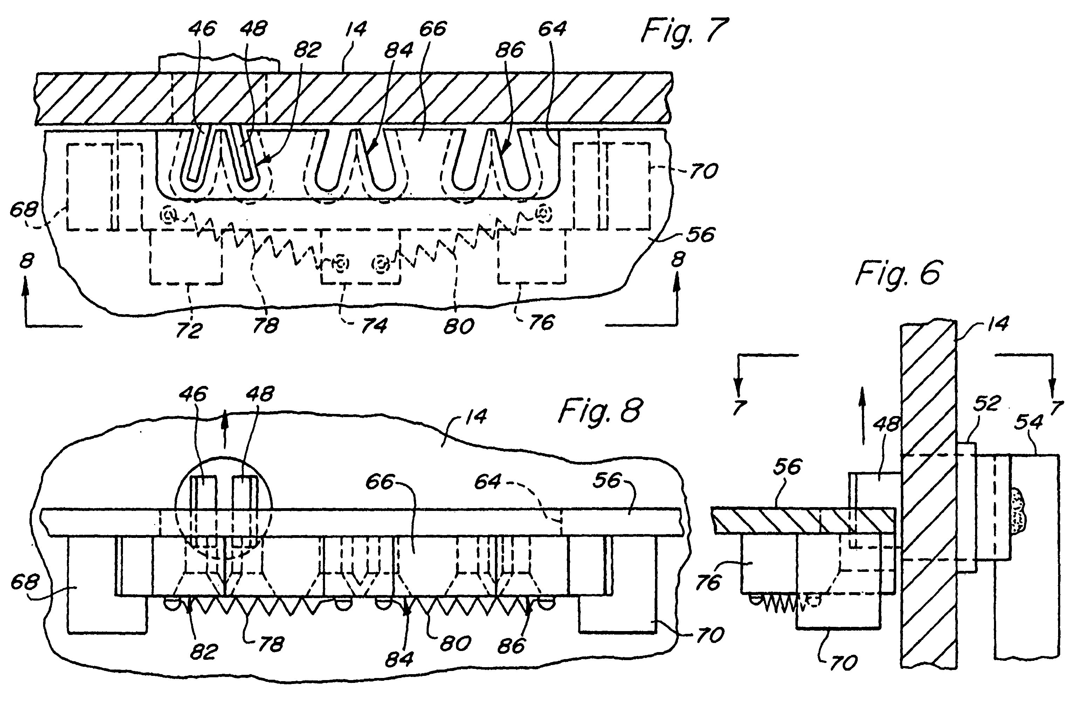

Der Behälter 16 weist eine Bodenwand 56 und drei Seitenwände 58, 60 und 62 auf und ist in Richtung der Scheibe 14 geöffnet. Wie es am besten aus den Figuren 6 - 8 ersehen werden kann, weist die Bodenwand 56 eine Öffnung 64 auf, gegenüber der eine Platte 66 verschiebbar angebracht ist. Wie es am besten den Figuren 7 und 8 entnommen werden kann, werden die Endbereiche der Platte 66 durch L-förmige Stützelemente 68 und 70 gehalten, welche an dem Boden der Bodenwand 56 außerhalb der Endbereiche der Öffnung 64 angebracht sind. Die Platte 66 wird ebenso zwischen der Oberfläche der Scheibe 14 und drei Anschlagelementen 72, 74 und 76 gehalten, welche an dem Boden der Bodenwand 56 in der Nähe der Öffnung 64 auf der der Scheibe 14 gegenüberliegenden Seite angebracht sind. Ein Paar von Federn 78 und 80 ist zwischen der Platte 66 und dem mittleren Anschlagelement 74 angebracht und derart vorgespannt, daß es die Platte 66 in Richtung einer zentralen Stellung belastet. Der Abstand zwischen den Anschlagelementen 68 und 70 ist größer als die Länge der Platte 66, so daß sich die Platte 66 dazwischen vor und zurück verschieben kann.

Die Platte 66 weist drei Paare von Schlitzen 82, 84 und 86 auf, welche so ausgerichtet und voneinander beabstandet sind, daß die Arme 46, 48 der Aufnahmemittel 30 sich hindurchbewegen können, wenn sich die Scheibe 14 dreht. Wenn jede Reihe 32 weniger oder mehr als drei Aufnahmemittel 30 aufweist, sollte die Platte eine korrespondierende Anzahl von Paaren von Schlitzen 82, 84, 86 aufweisen. Vorzugsweise, wie es am besten in den Figuren 7 und 8 gesehen werden kann, weisen die Schlitze 82, 84, 86 einen engeren oberen Endbereich und einen weiteren unteren Endbereich auf. Dieses Merkmal trägt zusammen mit der Verschiebebewegung der Platte 66 dazu bei, sicherzustellen, daß die Aufnahmemittel 30 leicht in die Schlitze 82, 84, 86 eintreten und sich nach oben durch die Schlitze 82, 84, 86 bewegen können.

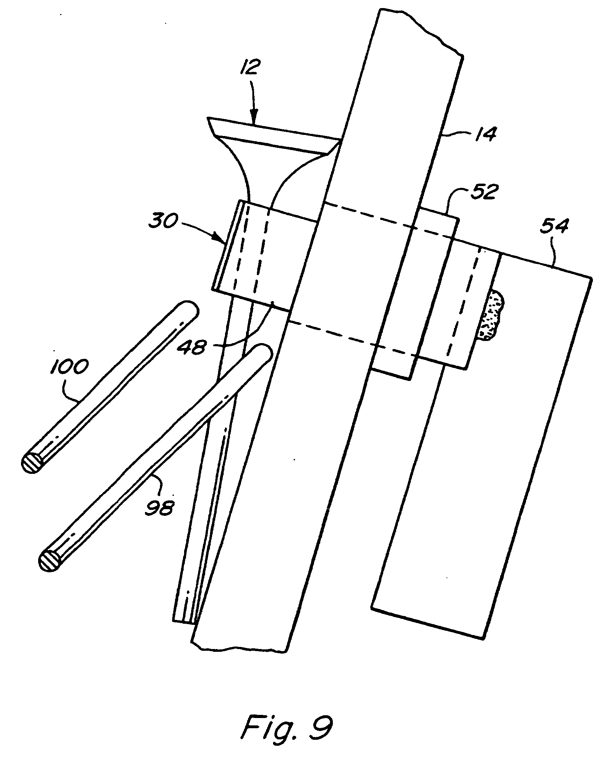

Angrenzend an die Scheibe 14 ist auch eine Transfereinrichtung 90 angeordnet. Vorzugsweise weist die Transfereinrichtung 90 eine Mehrzahl von Schienenpaaren 92, 94, 96 auf. Jedes Schienenpaar 92, 94, 96 weist einen oberen Endbereich 102, 104, 106 auf, welcher angrenzend an einen oberen Teil der Scheibe 14 und (wie es am besten in Fig. 9 gesehen werden kann) leicht unterhalb der Unterseite des entsprechenden Aufnahmemittels 30 angeordnet ist, wenn sich das Aufnahmemittel 90 an oder geringfügig über dem Gipfelpunkt seines Bogens befindet, wenn sich die Scheibe 14 dreht. Jedes Schienenpaar 92, 94, 96 erstreckt sich von den oberen Endbereichen 102, 104, 106 weg nach unten, weg von der Scheibe 14 und im wesentlichen in Drehrichtung des oberen Bereichs der Scheibe 14, wie es am besten den Figuren 1, 2 und 9 entnommen werden kann. Wie es am besten aus Fig. 9 ersehen werden kann, weist jedes Schienenpaar 92, 94, 96 eine innere Schiene 98 sowie eine äußere Schiene 100 auf, welche von der inneren Schiene 98 beabstandet und zu dieser parallel ausgerichtet ist. Die Öffnung oder der Spalt zwischen den Schienen 98 und 100 nimmt ein Ventil 12 auf und ist so positioniert, daß aneinander angrenzende Schienenpaare 92, 94, 96 daran angreifen und das Ventil 12 von dem Aufnahmemittel 30 aufgenommen wird, wenn jedes Aufnahmemittel 30 in eine an die oberen Endbereiche 102, 104 und 106 der Schienenpaare 92, 94 und 96 angrenzende Stellung bewegt wird.

Wenn der Motor 18 die Scheibe 14 dreht, bewegen sich die Arme 48, 50 jedes Aufnahmemittels 30 durch die Schlitze 82, 84 und 86 in der Platte 66, so daß die Aufnahmemittel 30 an Ventilen 12 angreifen und diese aufnehmen können, wenn sie sich im wesentlichen aufwärts bewegen. Die Ventile 12 verbleiben in einer im wesentlichen vertikalen Ausrichtung, wenn sich die Scheibe 14 im Uhrzeigersinn dreht (siehe Fig. 1).

Schließlich wird, wenn jedes Ventil 12 und Aufnahmemittel 30 sich in der Nähe des Gipfelpunkts seines Bogens befindet, wenn sich das Rad dreht, jedes Ventil 12 von seinem Aufnahmemittel 30 durch ein korrespondierendes Schienenpaar 92, 94, 96 abgenommen werden. Daraufhin gleiten die Ventile 12 zwischen den Schienenpaaren 92, 94, 96 hinunter und von der Scheibe 14 weg.

Während die vorliegende Erfindung mit Bezug auf eine spezifische Ausführungsform beschrieben wurde, ist es offensichtlich, daß viele Alternativen, Modifikationen und Variationen für den Fachmann im Lichte der vorausgegangenen Beschreibung offensichtlich sind. Beispielsweise könnte die vorliegende Erfindung dazu genutzt werden, andere Teile als Ventile bzw. Motorventile, welche Köpfe bzw. verbreiterte Bereiche und Schäfte aufweisen, aufzunehmen und auszurichten. Entsprechend ist es beabsichtigt, daß die Erfindung alle solche Alternativen, Modifikationen und Variationen, welche in den Bereich der folgenden Ansprüche fallen, umfaßt.

## Patentansprüche

1. Sortiereinrichtung (10) für längliche Teile, welche einen Kopf und einen Schaft aufweisen, mit einer gekippten, drehend antreibbaren Scheibe (14), wenigstens einem Aufnahmemittel (30) zur Aufnahme von Teilen, das an der Scheibe (14) drehbar angebracht ist, wenigstens ein Paar von Armen (46, 48) aufweist, die auf der Oberfläche der Scheibe (14) vorgesehen sind und sich nach außen erstrecken, und mit einem Gewichtselement (54) derart zusammenwirkt, daß eine vorgegebene Ausrichtung des Aufnahmemittels (30) auch dann aufrechterhalten wird, wenn die Scheibe (14) rotiert, und einer Transfereinrichtung (90) zur Entgegennahme von Teilen von dem Aufnahmemittel (30), wobei die Transfereinrichtung (90) an die Scheibe (14) angrenzend angeordnet ist, **dadurch gekennzeichnet, daß** die Arme (46, 48) eine V-förmige Struktur bilden.

2. Sortiereinrichtung nach Anspruch 1, **dadurch gekennzeichnet, daß** die Scheibe (14) wenigstens eine Aussparung (40) zur Aufnahme des Aufnahmemittels (30) aufweist, wobei das Aufnahmemittel (30) vorzugsweise eine zylindrische Welle (42) aufweist bzw. mit einer solchen verbindbar ist.

3. Sortiereinrichtung nach Anspruch 2, **dadurch gekennzeichnet, daß** sich die Arme (46, 48) von der Welle (42) weg erstrecken.

4. Sortiereinrichtung nach einem oder mehreren der vorherigen Ansprüche, **gekennzeichnet durch** einen Behälter (16), der eine Bodenwand (56) mit einer Öffnung (64) aufweist und **durch** eine Platte (66), die mit der Bodenwand (56) verschieblich und an die Öffnung (64) angrenzend verbunden ist, wobei die Platte (66) wenigstens einen Schlitz (82, 84, 86) aufweist, **durch** den das Aufnahmemittel (30) hindurchwandern kann, wenn sich die Scheibe (14) dreht.

5. Sortiereinrichtung nach Anspruch 4, **dadurch gekennzeichnet, daß** die Platte (66) vorzugsweise in Richtung einer zentralen Stellung vorgespannt bzw. federbelastet ist.

6. Sortiereinrichtung nach Anspruch 4 oder 5, **dadurch gekennzeichnet, daß** der Behälter (16) in Richtung der Scheibe (14) geöffnet ist.

7. Sortiereinrichtung nach einem oder mehreren der vorherigen Ansprüche, **dadurch gekennzeichnet, daß** mehrere Aufnahmemittel (30) vorgesehen sind, die vorzugsweise wenigstens eine Reihe (32) auf der Oberfläche der Scheibe (14) bilden, wobei sich die Reihe (32) von einem äußeren Punkt zu einem inneren Punkt auf der Scheibe (14) erstrecken.

8. Sortiereinrichtung nach Anspruch 7, **dadurch gekennzeichnet, daß** die Reihe (32) mit einer radialen Linie (R), die sich durch den Scheibenmittelpunkt erstreckt, einen Winkel (A) einschließt.

9. Sortiereinrichtung nach einem oder mehreren der vorherigen Ansprüche, **dadurch gekennzeichnet, daß** die Transfereinrichtung (90) wenigstens ein Schienenpaar (92, 94, 96) aufweist.

## Claims

1. A sorting device (10) for elongated parts which have a head and a stem, with a tilted disc (14) which can be driven in rotation, at least one receiving means (30) for reception of parts, which means is rotatably fitted on the disc (14), comprises at least one pair of arms (46, 48), which are provided on the surface of the disc (14) and extend outwardly, and so cooperates with a weight element (54) that a predetermined alignment of the receiving means (30) is maintained even when the disc (14) rotates, and a transfer device (90) for reception of parts from the receiving means (30), wherein the transfer device (90) is arranged adjoining the disc (14), **characterized in that** the arms (46, 48) form a V-shaped structure.

2. A sorting device according to claim 1, **characterized in that** the disc (14) has at least one opening (40) for reception of the receiving means (30), wherein the receiving means (30) preferably comprises a cylindrical shaft (42) or can be connected to such.

3. A sorting device according to claim 2, **characterized in that** the arms (46, 48) extend away from the shaft (42).

4. A sorting device according to one or more of the preceding claims, **characterized by** a container (16) which has a bottom wall (56) with an opening (64) and by a plate (66) which is movably attached to the bottom wall (56) and adjoining the opening (64), wherein the plate (66) has at least one slot (82, 84, 86), through which the receiving means (30) can pass when the disc (14) rotates.

5. A sorting device according to claim 4, **characterized in that** the plate is preferably biased or spring loaded in the direction of a central position.

6. A sorting device according to claim 4 or 5, **characterized in that** the container (16) is open in the direction of the disc (14).

7. A sorting device according to one or more of the preceding claims, **characterized in that** a plurality of receiving means (30) are provided and preferably form at least one row (32) on the surface of the disc (14), wherein the rows (32) extend from an outer point to an inner point on the disc (14).

8. A sorting device according to claim 7, **characterized in that** the row (32) includes an angle (A) with a radial line (R) which extends through the disc central point.

9. A sorting device according to one or more of the preceding claims, **characterized in that** the transfer device (90) comprises at least one pair of rails (92, 94, 96).

## Revendications

1. Dispositif de tri (10) pour des pièces allongées munies d'une tête et d'une tige, comprenant un disque (14) incliné, apte à être entraîné en rotation, au moins un moyen de réception (30) destiné à recevoir les pièces et monté rotatif sur le disque (14), au moins une paire de bras (46, 48) prévus sur la surface du disque (14) et s'étendant vers l'extérieur, et coopère avec un élément de poids (54) de telle sorte que le moyen de réception (30) est maintenu dans une orientation prédéfinie même lorsque le disque (14) est entraîné en rotation, et une unité de transfert (90) destiné à prendre les pièces du moyen de réception (30), l'unité de transfert (90) étant adjacente au disque (14), **caractérisé en ce que** les bras (46, 48) forment une structure en V.

2. Dispositif de tri selon la revendication 1, **caractérisé en ce que** le disque (14) comporte au moins un évidement (40) destiné à recevoir le moyen de réception (30), le moyen de réception (30) comportant de préférence un arbre (42) cylindrique ou pouvant être relié à un tel arbre.

3. Dispositif de tri selon la revendication 2, **caractérisé en ce que** les bras (46, 48) s'étendent en s'écartant de l'arbre (42).

4. Dispositif de tri selon une ou plusieurs des revendications précédentes, **caractérisé par** un bac (16) qui est muni d'un fond (56) avec une ouverture (64) et par une plaque (66) qui est assemblée coulissante avec le fond (56) et adjacente à l'ouverture (64), la plaque (66) comportant au moins une fente (82, 84, 86) à travers laquelle peut passer le moyen de réception (30) lorsque le disque (14) est entraîné en rotation.

5. Dispositif de tri selon la revendication 4, **caractérisé en ce que** la plaque (66) est précontrainte, plus précisément sollicitée par un ressort, de préférence en direction d'une position centrale.

6. Dispositif de tri selon la revendication 4 ou 5, **caractérisé en ce que** le bac (16) est ouvert en direction du disque (14).

7. Dispositif de tri selon l'une quelconque des revendications précédentes, **caractérisé en ce qu'**il est prévu plusieurs moyens de réception (30) qui forment de préférence au moins une rangée (32) sur la surface du disque (14), la rangée (32) s'étendant à partir d'un point extérieur vers un point intérieur sur le disque (14).

8. Dispositif de tri selon la revendication 7, **caractérisé en ce que** la rangée (32) forme un angle (A) avec une ligne radiale (R) qui passe par le centre du disque.

9. Dispositif de tri selon une ou plusieurs des revendications précédentes, **caractérisé en ce que** l'unité de transfert (90) comporte au moins une paire de rails (92, 94, 96).
